(19) **Europäisches Patentamt / European Patent Office / Office européen des brevets**

(11) **EP 3 406 566 A1**

(12) **EUROPEAN PATENT APPLICATION**
published in accordance with Art. 153(4) EPC

(43) Date of publication:
**28.11.2018 Bulletin 2018/48**

(21) Application number: **17741301.0**

(22) Date of filing: **13.01.2017**

(51) Int Cl.:
**C01B 32/336** (2017.01)   **B01J 20/20** (2006.01)
**B01J 20/28** (2006.01)   **B01J 20/30** (2006.01)

(86) International application number:
**PCT/JP2017/000967**

(87) International publication number:
**WO 2017/126421 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.01.2016 JP 2016007915**
**28.12.2016 JP 2016256447**

(71) Applicant: **Dexerials Corporation**
**Tokyo 141-0032 (JP)**

(72) Inventors:
• **TAKEKUMA, Hirofumi**
**Tokyo 141-0032 (JP)**
• **YAMADA, Shinichiro**
**Tokyo 141-0032 (JP)**
• **KIMURA, Kazuhiro**
**Tokyo 141-0032 (JP)**
• **ISHII, Takuhiro**
**Tokyo 141-0032 (JP)**
• **TANBA, Katsuya**
**Tokyo 141-0032 (JP)**

(74) Representative: **Graf von Stosch**
**Patentanwaltsgesellschaft mbH**
**Prinzregentenstraße 22**
**80538 München (DE)**

(54) **POROUS CARBON MATERIAL, METHOD FOR MANUFACTURING SAME, FILTER, SHEET, AND CATALYST CARRIER**

(57)   A porous carbon material wherein a particle diameter is 10 $\mu$m or more but 1 cm or less; wherein a bulk specific gravity is 0.20 g/cm$^3$ or more; and wherein a mesopore volume is 0.10 cm$^3$/g or more.

## FIG. 1

EP 3 406 566 A1

**Description**

Technical Field

The present invention relates to a porous carbon material, and a method for producing the porous carbon material, and a filter, a sheet, and a catalyst carrier.

Background Art

Porous carbon materials represented by activated carbon are obtained by activating charred products, which are made from plant materials (e.g., wood pulp, coconut shell, and chaff), mineral materials (e.g., coal, tar, and petroleum pitch), and synthetic resins, through treatment with gases or chemicals under a high temperature to thereby form fine pores. The fine pores form a network structure within carbon and result in a large surface area. Therefore, the porous carbon material is excellent in an adsorption ability. As a result, the porous carbon material has been widely used in a variety of applications such as odor removal, impurity removal in liquid, and solvent vapor recovery or removal. Additionally, the porous carbon material has also been used for a catalyst carrier earring a catalyst.

There has been disclosed, as a plant-derived porous carbon material, for example, a porous carbon material which is obtained by charring a plant-derived material, followed by treating with an acid or an alkali, and which has a specific surface area of 10 $m^2$/g or more as measured by the nitrogen BET method, a silicon content of 1% by mass or less, and a pore volume of 0.1 $cm^3$/g or more (see, PTL 1).

Citation List

Patent Literature

PTL 1 Japanese Patent Application Laid-Open (JP-A) No. 2008-273816

Summary of Invention

Technical Problem

Among porous carbon materials, a carbon material in which mesopores are developed is excellent in adsorption of large molecules and in a high-speed adsorption ability. However, such a porous carbon material has many cavities and a small bulk specific gravity. Therefore, when performance per volume is considered important in, for example, a filter cartridge, the porous carbon material is filled only one fifth to one fourth by weight as heavy as a commonly used coconut shell-derived activated carbon.

Therefore, the carbon material in which mesopores are developed is excellent in an adsorption property per weight, but its superiorities are not exhibited in terms of per volume in many times. Thus, there is a problem that the carbon material has difficulty in exhibiting a higher performance as, for example, a filter cartridge than conventional products.

The present invention aims to solve the above existing problems and achieve the following objects.

That is, an object of the present invention is to provide a porous carbon material in which mesopores are developed and which has a high bulk specific gravity, and a method for producing the porous carbon material, and a filter, a filter cartridge, a sheet, and a catalyst carrier using the porous carbon material.

Solution to Problem

Means for solving the above problems are as follows.

<1> A porous carbon material
wherein a particle diameter is 10 $\mu$m or more but 1 cm or less;
wherein a bulk specific gravity is 0.20 g/$cm^3$ or more; and
wherein a mesopore volume is 0.10 $cm^3$/g or more.
<2> The porous carbon material according to <1>, wherein the porous carbon material includes a plant-derived material.
<3> The porous carbon material according to <2>, wherein the plant-derived material is chaff.
<4> A filter including
the porous carbon material according to any one of <1> to <3>.

<5> The filter according to <4>, wherein the filter is for water purification.

<6> The filter according to <4>, wherein the filter is for air cleaning.

<7> A filter cartridge including
the filter according to any one of <4> to <6>.

<8> A sheet including
the porous carbon material according to any one of <1> to <3>.

<9> A catalyst carrier including
the porous carbon material according to any one of <1> to <3>.

<10> A method for producing the porous carbon material according to any one of <1> to <3>, the method including:

pressure-molding a plant-derived material to thereby obtain a molded product,
carbonizing the molded product to thereby obtain a carbonized product, and
activating the carbonized product.

<11> The method for producing the porous carbon material according to <10>, wherein the plant-derived material is chaff.

<12> The method for producing the porous carbon material according to <10> or <11>, wherein the molded product is obtained by pressure-molding the plant-derived material having a water content of 3% by mass or more but 30% by mass or less.

Advantageous Effects of the Invention

According to the present invention, it is possible to solve the above existing problems and achieve the above object. It is possible to provide a porous carbon material in which mesopores are developed and which has a high bulk specific gravity, and a method for producing the porous carbon material, and a filter, a filter cartridge, a sheet, and a catalyst carrier using the porous carbon material.

Brief Description of Drawings

FIG. 1 is a graph illustrating a relationship between particle diameters and bulk specific gravities of Example 1 and Comparative Example 1.
FIG. 2 is a graph illustrating a residual chlorine removal performance of Example 1 and Comparative Example 1.
FIG. 3 is a graph illustrating a residual chlorine removal performance of Example 2 and Comparative Example 2.

Description of Embodiments

(Porous carbon material)

A porous carbon material of the present invention meets the following (1) to (3):

(1) a particle diameter is 10 $\mu$m or more but 1 cm or less;
(2) a bulk specific gravity is 0.20 g/cm$^3$ or more; and
(3) a mesopore volume is 0.1 cm$^3$/g or more.

<Particle diameter>

A porous carbon material having the particle diameter of less than 10 $\mu$m has difficulty in having a high bulk specific gravity (e.g., 0.2 g/cm$^3$ or more). A porous carbon material having the particle diameter of more than 1 cm tends to take a longer time to demineralize through an acid- or alkali-treatment, leading to a deteriorated manufacture efficiency.

The particle diameter can be determined using, for example, a laser diffraction/scattering particle size distribution measurement device LA-950 (available from HORIBA, Ltd.). The LA-950 is used to measure a particle diameter distribution in a particle diameter range of 0.01 $\mu$m to 3,000 $\mu$m using a wet method. The particle diameter means a particle diameter (median diameter) corresponding to a median in a particle diameter distribution in which particle diameters and number frequencies are plotted on the horizontal axis and the vertical axis, respectively.

<Bulk specific gravity>

The bulk specific gravity of the porous carbon material is 0.20 $g/cm^3$ or more, preferably 0.20 $g/cm^3$ or more but 0.40 $g/cm^3$ or less, more preferably 0.20 $g/cm^3$ or more but 0.35 $g/cm^3$ or less.

A porous carbon material in which mesopores are developed (i.e., the mesopore volume is 0.1 $cm^3/g$ or more) has generally the bulk specific gravity of about 0.10 $g/cm^3$. Therefore, in terms of per volume, this porous carbon material cannot exhibit its superiorities such as excellent adsorption of large molecules and an excellent high-speed adsorption ability. Meanwhile, when the bulk specific gravity is 0.20 $g/cm^3$ or more, the porous carbon material can exhibit its superiorities such as excellent adsorption of large molecules and an excellent high-speed adsorption ability in terms of per volume and also per weight.

The bulk specific gravity means a specific gravity (mass per unit volume) calculated by dividing a mass of powder, which has been formed into a predetermined shape by, for example, filling the powder into a container having a certain volume through free drop, by a volume of the powder at that time. The smaller the bulk specific gravity is, the more bulky the powder is.

<Mesopore volume>

The mesopore volume of the porous carbon material is 0.1 $cm^3/g$ or more, preferably 0.1 $cm^3/g$ or more but 0.3 $cm^3/g$ or less, more preferably 0.1 $cm^3/g$ or more but 0.2 $cm^3/g$ or less. When the mesopore volume is less than 0.1 $cm^3/g$, the mesopores are far from developed and the superiorities such as excellent adsorption of large molecules and an excellent high-speed adsorption ability cannot be attained. Meanwhile, when the mesopore volume is too large, the bulk specific gravity has difficulty in being high.

The porous carbon material has many pores. The pores are classified into mesopores, micropores, and macropores. As used herein, the mesopores refer to pores having a pore diameter of 2 nm to 50 nm, the micropores refer to pores having a pore diameter of less than 2 nm, and the macropores refer to pores having a pore diameter of more than 50 nm.

The mesopore volume can be measured using, for example, the device described below.

The mesopore volume can be determined by measuring a nitrogen adsorption isotherm using 3FLEX (available from Micromeritics Instrument Corporation) and calculating the mesopore volume using the BJH method.

The BJH method is a widely used method as a pore distribution analysis method. When a pore distribution is analyzed based on the BJH method, nitrogen serving as adsorbing molecules is adsorbed on and desorbed from an adsorbent (porous carbon material) to determine a desorption isotherm. Then, based on the desorption isotherm, a thickness of an adsorption layer while the adsorbing molecules (e.g., nitrogen) are desorbed stepwise from a state in which pores are filled with the adsorbing molecules and an inner diameter of pores generated thereupon (twice as long as a core radius). A pore radius $r_p$ is calculated based on the expression (1) and a pore volume is calculated based on the expression (2). Then, based on the pore radius and the pore volume, rates of change in pore volume are plotted against pore diameters ($2r_p$) ($dV_p/dr_p$) to thereby generate a pore distribution curve (see, a manual of BELSORP-mini and BELSORP analysis software (available from MicrotracBEL Corp.), pages 85 to 88).

$$r_p = t + r_k \qquad (1)$$

$$V_{pn} = R_n \cdot dV_n - R_n \cdot dt_n \cdot c \cdot \Sigma A_{pj} \qquad (2)$$

wherein

$$R_n = r_{pn}^2 / (r_{kn-1} + dt_n)^2 \qquad (3)$$

In the above expressions,
$r_p$: pore radius;
$r_k$: core radius (inner diameter / 2) when an adsorption layer having a thickness t is adsorbed on an inner wall of a pore having the pore radius $r_p$ at the pressure;
$V_{pn}$: pore volume when nitrogen is desorbed at the n th time;
$dV_n$: amount of change at that time;
$dt_n$: amount of change in thickness $t_n$ of the adsorption layer when nitrogen is desorbed at the n th time;

$r_{kn}$: core radius at that time;

c: constant value; and

$r_{pn}$: pore radius when nitrogen is desorbed at the n th time.

Also, $\Sigma A_{pj}$ represents an integrated value of a wall surface area of the pore in a range of from j = 1 to j = n - 1.

[Specific measurement method]

Thirty milligrams of the porous carbon material is prepared. The 3FLEX which is set to the condition to measure in a relative pressure (P/P0) of 0.0000001 to 0.995 can be used to measure the mesopore volume.

<Raw material of porous carbon material>

A raw material of the porous carbon material is preferably a plant-derived material. When the raw material is plant-derived, a value of the mesopore volume is easily adjusted to the desired value described above. The plant-derived material is also advantageous in terms of a low environmental loading.

The plant-derived material is not particularly limited and may be appropriately selected depending on the intended purpose. Examples thereof include chaff or straw of rice, barley, wheat, rye, Japanese millet, and millet. Alternatively, reed or wakame stem may be used. Additional examples thereof include vascular plants living on the ground, pteridophyte, bryophyte, algae, and seaweeds. Note that, these materials may be used as the raw material alone or in a mixture of a plurality of them. A shape or form of the plant-derived material is also not particularly limited. For example, the chaff or straw may be used as it is or subjected to drying treatment. Moreover, those which have been subjected to various treatments such as fermentation treatment, roast treatment, and extraction treatment in food and drink processing such as beer, wines, and spirits may be used. In particular, in terms of attempting to recycle industrial wastes, straw and chaff which have been processed, e.g., thrashed are preferably used. These straw and chaff which have been processed can be abundantly and easily available from, for example, agricultural cooperatives, brewing manufactures, and food companies.

A method for producing the porous carbon material is not particularly limited and may be appropriately selected depending on the intended purpose, but is preferably the below-described method for producing a porous carbon material.

(Method for producing porous carbon material)

A method for producing a porous carbon material of the present invention includes a molded product producing step, a carbonized product producing step, and an activation step, and preferably a demineralizing step; and, if necessary, further includes other steps.

The method for producing a porous carbon material is a method for producing the porous carbon material of the present invention.

<Molded product producing step>

The molded product producing step is not particularly limited and may be appropriately selected depending on the intended purpose, as long as it is a step of pressure-molding a plant-derived material to thereby obtain a molded product.

The plant-derived material is not particularly limited and may be appropriately selected depending on the intended purpose. Examples thereof include the plant-derived materials exemplified in the section "Porous carbon material." Among them, the chaff is preferable because a desired porous carbon material is easily produced.

A shape of the molded product is not particularly limited and may be appropriately selected depending on the intended purpose.

In the pressure molding, for example, a pelletizer commonly used in molding of biomass is used. The chaff is ground, added with water so as to have a water content of 3% by mass or more but 30% by mass or less, preferably 5% by mass or more 20% by mass or less, and then molded. A pressure at this time is determined by friction resistance between a mold and the chaff when the chaff passes through a molding machine. Therefore, it is desirable to adjust an amount of water depending on a size of a molded product.

Heat may be generated through friction in the pressure molding, but additional heat may be applied by a heating device.

The molded product is believed to be produced as follows. A water-soluble component included in the plant-derived material is extracted by appropriately adjusting water, pressure, and heat. Powder is adhered together by the action of the water-soluble component to thereby form the molded product.

By pressure-molding the plant-derived material, a porous carbon material in which mesopores are developed and which has a higher bulk specific gravity than that when the plant-derived material is not pressure-molded is obtained.

<Carbonized product producing step>

The carbonized product producing step is not particularly limited and may be appropriately selected depending on the intended purpose, as long as it is a step of carbonizing (charring) the molded product to thereby obtain a carbonized product (carbonaceous material).

The carbonization (charring) generally means that an organic material (plant-derived material herein) is converted into a carbonaceous material through a heat treatment (e.g., see JIS M0104-1984). Note that, examples of an atmosphere under which the charring takes place include an oxygen-blocked atmosphere, in particular, a vacuum atmosphere, an inert gas atmosphere such as a nitrogen gas and an argon gas, and an atmosphere under which the molded product is in a kind of steam-roasted state. A heating rate to reach a charring temperature may be 1°C/min or more, preferably 3°C/min or more, more preferably 5°C/min or more under such an atmosphere. The upper limit of a charring time may include but not limited to 10 hours, preferably 7 hours, more preferably 5 hours. The lower limit of the charring time may be a time during which the molded product is surely charred.

Examples of a temperature at which the heat treatment is performed include 300°C to 1,000°C.

<Activation step>

The activation step is not particularly limited and may be appropriately selected depending on the intended purpose, as long as it is a step of activating the carbonized product. Examples thereof include a gas activation method and a chemical activation method.

The activation as used herein means developing a pore structure in a carbonaceous material and adding pores to the carbonaceous material.

The gas activation method is a method in which the carbonized product is heated under a gas atmosphere using, as an activator, oxygen, water vapor, carbon dioxide, air etc. at, for example, 700°C to 1,000°C for from several ten minutes to several hours to thereby develop a fine structure by a volatile component or a carbon molecules in the carbonized product. Note that, a heating temperature may be appropriately selected depending on a kind of the plant-derived material, and a kind and a concentration of the gas, but is preferably 800°C to 950°C.

The chemical activation method is a method in which the carbonized product is activated using, for example, zinc chloride, iron chloride, calcium phosphate, calcium hydroxide, magnesium carbonate, potassium carbonate, and sulfuric acid instead of oxygen or water vapor used in the gas activation method, washed with hydrochloric acid, pH-adjusted with an alkaline aqueous solution, and dried.

<Demineralizing step>

The demineralizing step is not particularly limited and may be appropriately selected depending on the intended purpose, as long as it is a step of removing a mineral in the carbonized product. Examples thereof include a method in which the carbonized product is immersed in an acid aqueous solution or an alkaline aqueous solution.

Prior to the demineralizing step, the carbonized product is preferably pulverized to a size at which the acid aqueous solution or the alkaline aqueous easily penetrates thereinto.

One example of the method for producing the porous carbon material will now be described below.

A carbonized product is obtained by heating pressure-molded chaff in a nitrogen gas stream at 500°C for 5 hours to thereby carbonize. Thereafter, 10 g of the carbonized product is placed into an alumina melting pot, heated in a nitrogen gas stream (10 L/min) to 1,000°C at a heating rate of 5°C/min, and charred at 1,000°C for 5 hours to thereby convert into a carbonaceous material (porous carbon material precursor). Then, the resultant carbonaceous material is cooled to room temperature. Note that, during charring and cooling, the nitrogen gas is continuously allowed to flow through. Next, the carbonaceous material is coarsely pulverized to a size of 1 cm or less, which is such a size as to easily undergo an alkali treatment, and a mineral in the material is removed with 1 mol% aqueous sodium hydroxide solution. Thereafter, the material is washed to thereby remove an alkali on a surface of the material and further washed. Then, the material is heat-treated at 950°C under a water vapor atmosphere. Thus, a plant-derived porous carbon material having a high bulk specific gravity is obtained.

(Sheet)

A sheet of the present invention includes the porous carbon material of the present invention; and, if necessary, other members.

The sheet is obtained by, for example, subjecting a powder which contains the porous carbon material to wet papermaking. For example, the sheet may be produced using a known technique as follows. The powder which contains the porous carbon material is mixed, sheared, and uniformly dispersed using devices such as a pulper, a beater, and a refiner to thereby produce a slurry. The resultant slurry may be adjusted to any basis weight by allowing to flow over a wire at a predetermined flow rate to dehydrate. Then, the resultant sheet is passed through a press part, dried in a drier part, smoothed in a calender part, and wound on a reel. A thickness of the sheet may be adjusted to any thickness by, for example, a heat press roller.

(Filter)

A filter of the present invention includes the porous carbon material of the present invention; and, if necessary, further includes other members.

The filter is used as a filter for water purification or a filter for air cleaning.

The filter is obtained, for example, by molding the sheet.

Examples of a molding method for obtaining the filter include but not limited to a method in which the sheet of the present invention is wound up and heat-treated to thereby form a columnar or cylindrical filter or a method in which the sheets are laminated together and punched into any shape to thereby form a filter.

(Filter cartridge)

A filter cartridge of the present invention includes at least the filter of the present invention; and, if necessary, further includes other members such as a housing.

The filter is contained in, for example, the housing.

The housing includes, for example, a housing body, a fluid inlet portion, and a fluid outlet portion.

The fluid inlet portion is disposed in the housing body and configured to allow a fluid to be filtered to flow therein.

The fluid outlet portion is disposed in the housing body and configured to allow a fluid having being filtered to flow therefrom.

(Catalyst carrier)

A catalyst carrier of the present invention includes the porous carbon material of the present invention; and, if necessary, further includes other members.

For example, the catalyst carrier is the porous carbon material itself.

The catalyst carrier can abundantly hold a catalyst such as a noble metal. Therefore, a catalyst-carried body in which a catalyst is carried on the catalyst carrier can promote a variety of chemical reactions and improve a yield.

In addition to the above applications, the porous carbon material of the present invention can also be used for, for example, electrode materials for capacitors, and a variety of adsorbents, masks, and adsorption sheets.

Examples

Examples of the present invention will now be described, but the present invention is not limited to thereto.

In Examples, a particle diameter, a bulk specific gravity, and a mesopore volume were measured by the methods described above.

A residual chlorine removing performance was measured by the flow test described below.

<Flow test and residual chlorine measurement>

In both of Examples and Comparative Examples, the flow test was performed as follows. A sample which had passed through a 10 mesh sieve but had not passed through a 32 mesh sieve was filled into a column. A liquid having a residual chlorine concentration of $0.5 \pm 0.1$ mg/L at an inlet was fed and a space velocity was SV = 2,000/h.

Color development at 435 nm was measured with a spectrophotometer using an o-tolidine method. Thus, free residual chlorine in the liquid which had passed through the column was quantified.

(Example 1)

Chaff was used as a raw material. The chaff was pulverized and formed into molded products having a diameter of 6 mm and a length of several millimeters to several ten meters by the S-5 type flat-die pelletizer (available from Shinkou Kouki Corporation). Water contents upon molding, bulk specific gravities of the molded products, and states of the molded products are presented in Table 1.

Note that, the water contents upon molding were adjusted by spraying water to the raw material using a sprayer and depending on sprayed amounts.

Table 1

| Water content (% by mass) | Bulk specific gravity of molded product (g/cm³) | State of molded product |
|---|---|---|
| 8 | 0.62 | About 20% by mass of powdery product was produced, but molded product was also obtained. |
| 13 | 0.73 | About 5% by mass of powdery product was produced, but molded product was also obtained. |
| 14 | 0.74 | Almost 100% by mass was formed into molded products. |

The water content (% by mass) means an amount of water contained in the raw materials and was measured using a heat-drying moisture meter. Specifically, 1 g of a sample was dried at 150°C for 20 min and measured for the water content based on a change in weight between before and after drying using ML-50 (available from A&D Company, Limited). For example, when 1.0 g of a sample is changed to 0.9 g after drying, the water content is 10% by mass.

Next, the produced molded product having the water content of 16% by mass was heated under a nitrogen gas stream at 600°C for 3 hours to thereby obtain a carbonized product.

Then, the carbonized product was coarsely pulverized to a size of about 2 mm, immersed in 1 mol% aqueous sodium hydroxide solution to thereby demineralize, and then washed.

Then, the resultant was activated by heating under a water vapor atmosphere at 950°C for 3.5 hours to thereby obtain a porous carbon material.

The resultant porous carbon material was pulverized with a Raikai mixer and classified with a sieve.

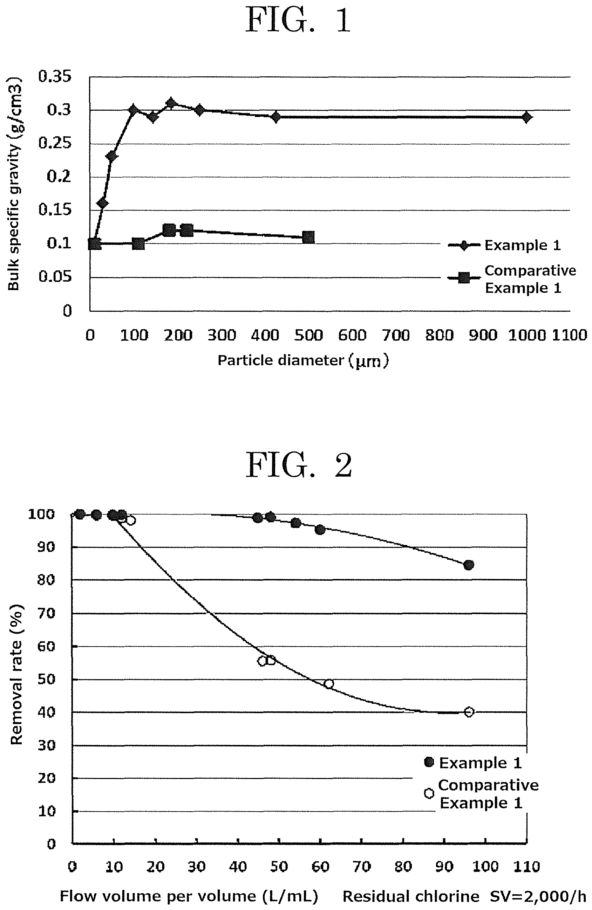

A relationship between a particle diameter and a bulk specific gravity of the thus-classified porous carbon material was determined and illustrated in FIG. 1.

A specific surface area and a mesopore volume of the classified porous carbon material are presented in Table 2.

Table 2

| Specific surface area (m²/g) | Mesopore volume (cm³/g) |
|---|---|
| 1,065 | 0.52 |

Note that, all samples having particle diameters plotted in FIG. 1 had the same specific surface area and the same mesopore volume.

(Comparative Example 1)

Chaff was used as a raw material.

Next, the chaff was heated under a nitrogen gas stream at 600°C for 3 hours to thereby obtain a carbonized product.

Then, the carbonized product was immersed in 1 mol% aqueous sodium hydroxide solution to thereby demineralize, and then washed.

Then, the resultant was activated by heating under a water vapor atmosphere at 950°C for 3 hours to thereby obtain a porous carbon material.

The resultant porous carbon material was pulverized with a Raikai mixer and classified with a sieve.

A relationship between a particle diameter and a bulk specific gravity of the thus-classified porous carbon material was determined and illustrated in FIG. 1.

A specific surface area and a mesopore volume of the classified porous carbon material are presented in Table 3.

Table 3

| Specific surface area (m²/g) | Mesopore volume (cm³/g) |
|---|---|
| 1,070 | 0.53 |

Note that, all samples having particle diameters plotted in FIG. 1 had the same specific surface area and the same mesopore volume.

As can be seen from FIG. 1, the porous carbon material of Comparative Example 1 (existing porous carbon material) had the bulk specific gravity of 0.10 g/cm$^3$ regardless of particle diameter, whereas the porous carbon material of Example 1 had a clearly higher bulk specific gravity than that of the existing porous carbon material in a region in which the particle diameter is 10 $\mu$m or more.

Especially in a region in which the particle diameter is 100 $\mu$m or more, the bulk specific gravity was about 3 times as high as that of the Comparative Example. Because the bulk specific gravity was about 3 times, a weight to be filled in the same container is also increased. For example, when the porous carbon material is used in a filter for water purification, a water purification performance is significantly improved.

Moreover, a residual chlorine removal performance for the same volume was examined using the method described above. The results are illustrated in FIG. 2.

An adsorption capacity is increased by improving the bulk specific gravity. Therefore, for example, a flow volume per material volume at which a removal rate is decreased to 80% or less is 27 L/mL for the Comparative Example 1. Whereas, in the Example 1, the removal rate is still more than 80% even when the flow volume per material volume is more than 100 L/mL. This indicates that a product life as a residual chlorine removal filter is increased about 4 times.

(Example 2)

A porous carbon material was produced in the same manner as in Example 1, except that the activation time was changed from 3.5 hours to 3 hours. A specific surface area and a mesopore volume of the resultant porous carbon material are presented in Table 4.

Note that, values of the particle diameter and the bulk specific gravity for Example 2 were comparable to those for Example 1 (FIG. 1).

(Comparative Example 2)

A porous carbon material was produced in the same manner as in Comparative Example 1, except that the activation time was changed from 3.5 hours to 2.5 hours. A specific surface area and a mesopore volume of the resultant porous carbon material are presented in Table 4.

Note that, values of the particle diameter and the bulk specific gravity for Comparative Example 2 were comparable to those for Comparative Example 1 (FIG. 1).

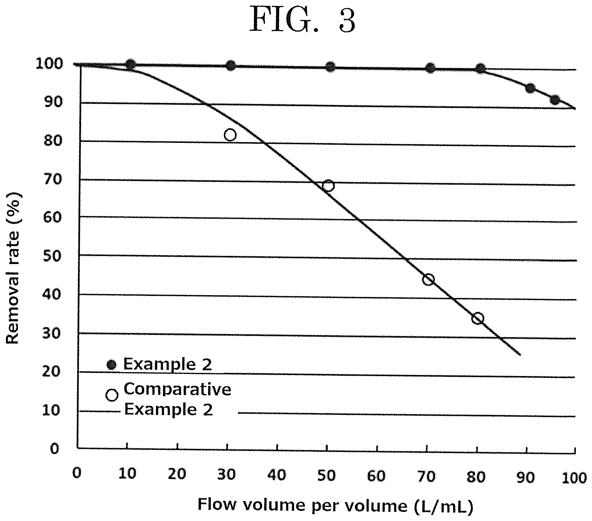

Moreover, a residual chlorine removal performance for the same volume was also examined for the porous carbon materials obtained in Example 2 and Comparative Example 2 using the method described above. The results are illustrated in FIG. 3.

The results comparable to those for Example 1 and Comparative Example 1 were obtained for Example 2 and Comparative Example 2 which had different specific surface area and mesopore volume.

Table 4

|  | Specific surface area (m$^2$/g) | Mesopore volume (cm$^3$/g) | Bulk specific gravity (g/cm$^3$) |
|---|---|---|---|
| Example 2 | 920 | 0.41 | 0.28 |
| Comparative Example 2 | 910 | 0.42 | 0.10 |

Industrial Applicability

The porous carbon material of the present invention has developed mesopores and a high bulk specific gravity and thus can be used for, for example, filters, electrode materials for capacitors, and a variety of adsorbents, masks, adsorption sheets, and catalyst carriers.

**Claims**

1. A porous carbon material
   wherein a particle diameter is 10 $\mu$m or more but 1 cm or less;
   wherein a bulk specific gravity is 0.20 g/cm$^3$ or more; and
   wherein a mesopore volume is 0.10 cm$^3$/g or more.

**2.** The porous carbon material according to claim 1, wherein the porous carbon material comprises a plant-derived material.

**3.** The porous carbon material according to claim 2, wherein the plant-derived material is chaff.

**4.** A filter comprising
the porous carbon material according to any one of claims 1 to 3.

**5.** The filter according to claim 4, wherein the filter is for water purification.

**6.** The filter according to claim 4, wherein the filter is for air cleaning.

**7.** A filter cartridge comprising
the filter according to any one of claims 4 to 6.

**8.** A sheet comprising
the porous carbon material according to any one of claims 1 to 3.

**9.** A catalyst carrier comprising
the porous carbon material according to any one of claims 1 to 3.

**10.** A method for producing the porous carbon material according to any one of claims 1 to 3, the method comprising:

pressure-molding a plant-derived material to thereby obtain a molded product,
carbonizing the molded product to thereby obtain a carbonized product, and
activating the carbonized product.

**11.** The method for producing the porous carbon material according to claim 10, wherein the plant-derived material is chaff.

**12.** The method for producing the porous carbon material according to claim 10 or 11, wherein the molded product is obtained by pressure-molding the plant-derived material having a water content of 3% by mass or more but 30% by mass or less.

# FIG. 1

# FIG. 2

# FIG. 3

## INTERNATIONAL SEARCH REPORT

| | International application No. |
|---|---|
| | PCT/JP2017/000967 |

**A. CLASSIFICATION OF SUBJECT MATTER**

*C01B32/336*(2017.01)i, *B01J20/20*(2006.01)i, *B01J20/28*(2006.01)i, *B01J20/30*(2006.01)i

According to International Patent Classification (IPC) or to both national classification and IPC

**B. FIELDS SEARCHED**

Minimum documentation searched (classification system followed by classification symbols)
C01B32/336, B01J20/20, B01J20/28, B01J20/30

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JST7580(JDreamIII), DWPI(Thomson Innovation)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-72712 A  (Japan Energy Corp.),<br>09 April 2009 (09.04.2009),<br>claims; paragraphs [0001] to [0007], [0013], [0017] to [0019], [0036] to [0037]; examples; table 1<br>(Family: none) | 1-3,10-12<br>4,7,9 |
| X<br>Y | JP 2013-203614 A  (Japan Enviro Chemicals, Ltd.),<br>07 October 2013 (07.10.2013),<br>claims; paragraphs [0001] to [0010], [0014] to [0016], [0021] to [0022]; examples; tables 1, 2<br>(Family: none) | 1-5,7<br>8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 March 2017 (03.03.17) | 14 March 2017 (14.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2017/000967

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2012-520230 A (British American Tobacco (Investments) Ltd.),<br>06 September 2012 (06.09.2012),<br>claims; paragraphs [0001], [0010] to [0022],<br>[0027]; examples; table 2<br>& US 2012/0174936 A1<br>claims; paragraphs [0001], [0010] to [0022],<br>[0027]; examples; table 2<br>& GB 904196 A & WO 2010/103323 A1<br>& EP 2406180 A1 & CA 2754563 A<br>& AR 78024 A & AU 2010222661 A<br>& KR 10-2011-0131257 A & CN 102348638 A<br>& MX 2011009520 A & RU 2011140975 A | 1-4,6,7<br>9 |
| X<br>Y | JP 2008-535754 A (British American Tobacco (Investments) Ltd.),<br>04 September 2008 (04.09.2008),<br>claims; paragraphs [0001], [0043], [0051] to<br>[0054], [0058] to [0088]; tables 3, 7<br>& US 2009/0038632 A1 & GB 506278 A<br>& WO 2006/103404 A1<br>claims; paragraphs [0001], [0042], [0051] to<br>[0054], [0075] to [0097]; tables 3, 7<br>& EP 2263484 A1 & CA 2598763 A<br>& KR 10-2007-0121807 A & CN 101150965 A | 1,4,6,7<br>9 |
| Y | JP 2007-141857 A (Aisin Seiki Co., Ltd.),<br>07 June 2007 (07.06.2007),<br>paragraph [0049]<br>(Family: none) | 4,7 |
| Y | JP 2012-179589 A (Sony Corp.),<br>20 September 2012 (20.09.2012),<br>paragraph [0044]<br>& US 2014/0231342 A1<br>paragraph [0068]<br>& WO 2012/108198 A1 & EP 2674214 A1<br>& TW 201238652 A & CN 103347604 A<br>& KR 10-2014-0005218 A | 8 |
| Y | JP 2005-87993 A (Toray Industries, Inc.),<br>07 April 2005 (07.04.2005),<br>claims; paragraph [0015]<br>(Family: none) | 9 |
| A | JP 10-297912 A (Kanebo, Ltd.),<br>10 November 1998 (10.11.1998),<br>paragraphs [0021] to [0023]; examples<br>(Family: none) | 1-12 |

Form PCT/ISA/210 (continuation of second sheet) (January 2015)

**INTERNATIONAL SEARCH REPORT**

International application No.

PCT/JP2017/000967

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-511322 A  (EnerG2 Technologies, Inc.), 15 May 2014 (15.05.2014), claims; examples & US 2012/0202033 A1 claims; examples & WO 2012/092210 A1      & EP 2659498 A1 & CN 103370756 A         & KR 10-2014-0092231 A | 1-12 |

Form PCT/ISA/210 (continuation of second sheet) (January 2015)

**REFERENCES CITED IN THE DESCRIPTION**

**Patent documents cited in the description**

- JP 2008273816 A